# FASCICULE DE BREVET EUROPEEN

(11) **EP 0 563 343 B1**
(45) Date de publication et mention de la délivrance du brevet: **29.05.1996**
(21) Numéro de dépôt: 92919892.7
(22) Date de dépôt: 08.10.1992
(51) Int. Cl.: B01D 29/11, B01D 29/54, B01D 29/60, B01D 29/64

(54) **FILTRE A NETTOYAGE PAR BALAYAGE DIRECT**
Durch Direktausspülung reinigungsbarer Filter
FILTER WITH DIRECT FLUSH CLEANING

(30) Priorité: 11.10.1991 CH 2996/91
(43) Date de publication de la demande: 06.10.1993
(73) Titulaire: Doucet, Charles, CH-1224 Chêne-Bougeries/Genève (CH)
(72) Inventeur: Doucet, Charles, CH-1224 Chêne-Bougeries/Genève (CH)
(74) Mandataire: Micheli & Cie
(86) Numéro de dépôt international: CH9200205
(87) Numéro de publication internationale: WO9306909

(56) Documents cités:
- WO-A-90/12634
- CH-A- 309 170
- GB-A- 1 021 987

## Description

La présente invention concerne un filtre destiné à être monté dans une conduite de fluide notamment d'eau brute, ayant un diamètre sensiblement égal à celui du corps du filtre.

D'une façon générale, les filtres rapides automatiques sont munis de systèmes mécaniques motorisés pour assurer leur nettoyage et sont toujours nettoyés par contre-courant (Back Wash).

Ces systèmes mécaniques nécessitent une construction pluri-métallique, donc corrosive, et le nettoyage par contre-courant induit un risque de faufilage et/ou de feutrage des éléments filtrants lorsque l'eau à filtrer contient des fibres.

Les brevets suisses Nos 516.331, 532.409, 597.894 et 678.400 au nom du demandeur apportent des solutions aux inconvénients précités en ce qu'ils proposent des filtres à nettoyage par balayage direct de la surface filtrante. Les brevets Nos 516.331 et 532.409 divulguent un filtre simple mono-élément à nettoyage laminaire sur un élément filtrant tubulaire, dans lequel on chasse rapidement un courant d'eau brute au moment du nettoyage par l'ouverture d'une vanne de chasse normalement fermée. Ces brevets expliquent également l'évolution d'un anneau virtuel de filtration évoluant d'aval en amont selon le degré de colmatage du filtre. Cette théorie permet de construire le filtre multi-éléments à plusieurs finesses, décrit dans le brevet N° 597.894 dans lequel chaque élément filtrant est prolongé par un coude traversant le corps du filtre par un piquage, et une vanne de chasse, normalement fermée. Toutes ces chasses individuelles sont alors reliées à un collecteur de chasse. Ces filtres fonctionnent parfaitement, mais sont coûteux à fabriquer du fait de la multiplication des piquages de chasses et des vannes.

Le brevet N° 678.400 permet d'abaisser le prix de revient de tels filtres en introduisant un turbo-distributeur qui met en contact chaque élément filtrant l'un après l'autre avec une seule sortie de chasse. Ceci permet de n'avoir qu'un seul piquage de chasse et qu'une seule vanne automatique (au lieu de 6 ou 8), de supprimer le collecteur de chasse et de simplifier l'installation et la programmation d'un tel filtre. Néanmoins ce dernier filtre présente les inconvénients suivants :

Le rotor du turbo-distributeur est une pièce coûteuse et relativement complexe à fabriquer. En présence d'eau brute chargée en impuretés, on constate une usure des pièces en mouvement, comme le rotor du turbo-distributeur. Dans certaines conditions extrêmes le rotor peut gripper ce qui nécessite un démontage du filtre et donc la fermeture temporaire de la conduite d'eau à filtrer.

Le filtre multi-éléments à nettoyage par balayage direct destiné à être monté dans une conduite de fluide, objet de la présente invention, tend à obvier aux inconvénients précités et se distingue par les caractéristiques définies dans la revendication 1.

Le dessin annexé illustre schématiquement et à titre d'exemple une forme d'exécution d'un filtre selon la présente invention.

La figure 1 est une coupe longitudinale du filtre selon l'invention.

La figure 2 est une coupe selon la ligne I-I de la figure 1.

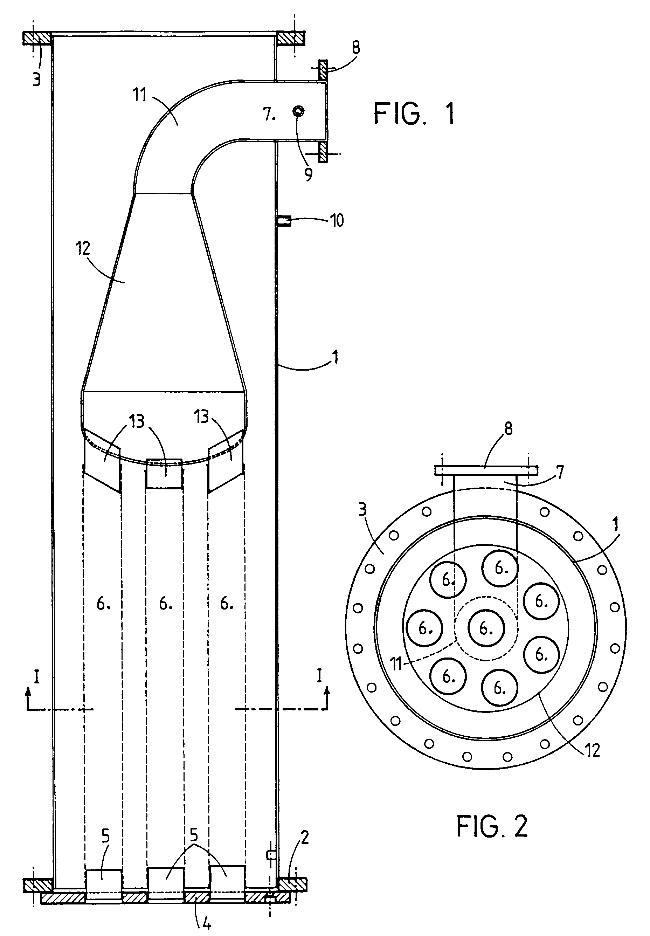

Le filtre tel qu'illustré à la figure 1 comporte un corps tubulaire 1, d'un diamètre sensiblement égal à celui de la conduite dans laquelle il doit être monté, muni à chacune de ses extrémités d'une bride 2,3 permettant de le fixer à ladite conduite. L'extrémité amont du corps 1 est munie d'une plaque distributrice 4 en appui contre la bride 2, percée d'orifices et fixée sur le corps 1 du filtre par des vis (non illustrées). Cette plaque 4 comporte des douilles 5 émergeant à l'intérieur du corps alimentant les éléments filtrants tubulaires 6 qui s'étendent axialement à l'intérieur du corps 1 et dont l'extrémité amont est enfichée sur une des douilles 5.

Le corps 1 comporte dans sa partie aval un unique piquage de chasse 7 reliant l'intérieur à l'extérieur du corps 1. Ce piquage de chasse 7, sous forme d'un tube de faible diamètre, est muni d'une bride 8 permettant de le raccorder à une vanne de chasse (non illustrée), de préférence automatique, qui est normalement fermée. Le piquage de chasse 7 est muni d'un piquage de petit diamètre 9 permettant le raccord d'un organe de mesure de la pression amont. Le corps 1 dans sa partie aval est également muni d'un piquage de faible diamètre 10 permettant d'y raccorder un organe de mesure de la pression aval du filtre. Ces deux organes de mesure de pression permettent de connaître la perte de charge (eau brute/eau filtrée) du filtre.

Le piquage de chasse 7 est relié à l'intérieur du corps 1 par un coude 11 à une chambre 12, ayant la fonction d'un collecteur, dont la forme générale est un corps de révolution. La forme de cette chambre dans l'exemple illustré est conique s'évasant vers l'extrémité amont du filtre. L'extrémité amont proprement dite de ce collecteur est cylindrique et sa paroi frontale est de préférence bombée, généralement en forme de portion de sphère. La dite paroi frontale peut également être plate.

Des tubes biseautés 13, de diamètre correspondant aux douilles 5 solidaires de la plaque distributrice 4 et alignés sur celles-ci, sont fixés sur la paroi frontale qu'ils traversent de la partie amont de la chambre formant le collecteur 12. Ces tubes reçoivent l'extrémité aval des éléments filtrants 6.

Le fait que les tubes 13 soient biseautés facilite le montage des éléments filtrants et permet d'éviter de devoir chanfreiner l'extrémité amont de ces tubes 13.

Cette construction permet de prévoir un élément filtrant 6 central, axé sur l'axe du filtre et non pas seulement une couronne d'éléments filtrants comme dans les filtres mono-chasse à rotor. On augmente ainsi la capacité de filtration du filtre pour un même diamètre et une même longueur de celui-ci.

Le filtre une fois monté dans la conduite de fluide à filtrer par les brides 2,3 fonctionne de la façon suivante:
Dans le cas d'une filtration d'eau, l'eau à filtrer pénètre, à une vitesse généralement comprise entre 2 et 15 m/s, au travers de la plaque distributrice amont 4 dans les éléments filtrants 6 et s'écoule à travers chacun des éléments en son extrémité aval, sous forme d'un anneau virtuel étroit qui constitue la zone filtrante de l'élément. En traversant les éléments filtrants, l'eau brute y dépose ses impuretés qui forment un manchon étanche déplaçant de l'aval vers l'amont l'anneau virtuel de filtration. L'eau ainsi filtrée s'écoule dans l'espace annulaire compris entre le corps tubulaire du filtre et le collecteur 12 vers la sortie aval du filtre.

Au fur et à mesure de son utilisation, les zones annulaires de filtration remontent vers l'amont du filtre pour finir par le colmater. Il en découle une augmentation de la perte de charge détectée par les organes de mesure de pression qui déclenchent automatiquement un cycle de lavage du filtre. En pratique on préférera déclencher ce cycle de lavage du filtre avant colmatage, au moyen d'un timer programmé par exemple, pour éviter une perte de charge dans la conduite.

Le cycle de lavage d'une durée de l'ordre de 10 à 25 secondes consiste en l'ouverture de la vanne de chasse (non illustrée) située à l'extrémité du piquage de chasse 7. Ce piquage de chasse 7, relié par le coude 11 à la chambre 12 draine l'ensemble des éléments filtrants 6 simultanément en une seule fois. La forme tronc-conique de la chambre 12, allant en se rétrécissant vers la partie aval du filtre, améliore l'effet de chasse en créant un mouvement tourbillonnaire. Il est à noter qu'un collecteur cylindrique non conique peut également avoir un rendement acceptable.

Durant la chasse périodique, le débit de chasse est de l'ordre de 30 % du débit nominal; il s'en suit une augmentation, pendant la chasse, du débit total absorbé par le filtre, augmentation qui est généralement sans autre assurée par le circuit hydraulique. Si le filtre fonctionne à une vitesse nominale de 7,5 m/s dans les éléments filtrants, l'augmentation de débit provoqué par la chasse fait passer la vitesse à environ 10 m/s garantissant ainsi un parfait nettoyage des éléments filtrant par balayage direct.

Cette brève chasse périodique permet des consommations d'eau brute de lavage extrêmement faible, la pratique la situe à moins d'un pour cent en filtration normale. Le filtre reste opérationnel même pour des vitesses nominales inférieures, de l'ordre de 5 à 6 m/s. En effet dans ces cas là, on obtient tout de même une vitesse de balayage, lors de la chasse du filtre, de l'ordre de 6,5 m/s qui est suffisante.

Dans des cas extrêmes, comme en présence d'une eau très chargée et en cas de colmatage du filtre, on peut au moment de la chasse fermer la vanne de sortie du filtre; ceci a pour effet d'annuler la pression différentielle qui plaque les impuretés contre les éléments filtrants et de permettre leur évacuation par balayage direct au moment de la chasse. La durée de la chasse étant très courte, quelques dizaines de secondes, l'interruption momentanée du circuit hydraulique est sans conséquence.

On notera qu'un filtre élémentaire constitué d'un seul élément filtrant prolongé d'une vanne de chasse de même diamètre que l'élément conduit à un débit de chasse incompatible avec les possibilités du réseau. Il faut donc réduire le circuit de chasse. L'expérience montre que dans ces conditions la veine active (qui présente une vitesse suffisante) a sensiblement le même diamètre que l'orifice réduit de chasse et qu'autour de cette colonne d'eau axiale, une zone de moindre vitesse parcourt la surface de l'élément filtrant sans le nettoyer. L'avantage d'un multi-élément à chasse unique est d'éviter cet inconvénient; on a en effet une surface filtrante suffisante, une chasse d'une section réduite compatible avec les possibilités du réseau et l'écoulement des éléments filtrants n'est pas réduit unitairement; les vitesses de balayages sont donc maximales le long des surfaces filtrantes permettant un nettoyage parfait.

Les avantages d'un tel filtre peuvent être résumés comme suit :
Un filtre multi-éléments, éventuellement à finesse variable, permettant de nettoyer les éléments par balayage direct lors de courtes chasses périodiques qui nettoient l'ensemble des éléments filtrants en une seule fois sans provoquer de perte de charge importante.

Ce filtre ne comporte aucune pièce mobile susceptible de s'user en présence de conditions de travail difficiles (eau très chargée en impuretés). Ce filtre est donc entièrement statique et il est d'un coût de revient environ deux fois plus faible que les précédents filtres tout en garantissant les mêmes performances car il est simple à fabriquer et à monter en grande série.

Dans une variante, on peut prévoir à l'intérieur du collecteur 12 des organes de déflexion, par exemple des ailettes, provoquant un écoulement tourbillonnaire de l'eau lors de la chasse du filtre. Un tel écoulement tourbillonnaire améliore l'effet de chasse et le nettoyage du filtre en augmentant la vitesse d'écoulement de l'eau et en créant des vibrations hydrauliques dans cet écoulement.

Le fait de prévoir un élément filtrant 6 central, situé dans l'axe du filtre, permet également de créer un écoulement tourbillonnaire lors de la chasse du filtre, tout en augmentant le débit nominal du filtre à dimensions égales.

Le filtre selon la présente invention est la réalisation optimale pour un filtre de ce type; il allie une très grande fiabilité (aucune pièce en mouvement) à un prix très réduit, ses éléments étant simples à fabriquer et à assembler, tout en assurant une filtration rapide de l'ordre de 50 à 1000 micromètres, de préférence de 100 à 500 micromètres.

## Revendications

1. Filtre à nettoyage par balayage direct destiné à être monté dans une conduite de fluide, comprenant un corps tubulaire (1) d'un diamètre sensiblement égal à celui de la conduite; une plaque de distribution amont (4) comprenant une pluralité d'orifices alimentant chacun une extrémité d'un élément filtrant tubulaire (6) s'étendant axialement à l'intérieur du corps (1), caractérisé par le fait que l'autre extrémité de tous les éléments filtrants (6) tubulaires est raccordée directement et de façon permanente à un même piquage de chasse unique (7), débouchant latéralement hors du corps (1) et destiné à être équipé d'une vanne, de manière à chasser tous les éléments filtrants en même temps.

2. Filtre selon la revendication 1, caractérisé par le fait que le raccordement de la partie aval des éléments filtrants à un coude (1) relié au piquage (7), présente un collecteur (12) ayant la forme générale d'un corps de révolution (12).

3. Filtre selon la revendication 2, caractérisé par le fait que le collecteur (12) a une forme tronconique s'évasant vers l'amont du filtre.

4. Filtre selon la revendication 3, caractérisé par le fait que la partie amont de ce collecteur (12) présente une portion cylindrique.

5. Filtre selon la revendication 3 ou la revendication 4, caractérisé par le fait que la face amont du collecteur (12) est bombée.

6. Filtre selon l'une des revendications précédentes, caractérisé par le fait que la base du collecteur comporte des tubes biseautés (13) destinés à s'emmancher dans l'extrémité aval des éléments filtrants (6) tandis que l'extrémité amont de chaque élément filtrant (6) est emmanchée sur une douille solidaire (5) de la plaque distributrice (4).

7. Filtre selon l'une des revendications précédentes, caractérisé par le fait qu'il est formé exclusivement de pièces statiques.

8. Filtre selon l'une des revendications précédentes, caractérisé par le fait que le collecteur (12) comporte des moyens créant, au moment de la chasse, un écoulement tourbillonnaire et/ou des vibrations hydrauliques dans l'écoulement.

9. Filtre selon l'une des revendications précédentes, caractérisé par le fait qu'il comporte une série d'éléments filtrants (6) disposés en couronne et un élément filtrant central (6) axé sur l'axe du filtre.

10. Filtre selon l'une des revendications précédentes, caractérisé par le fait que la finesse de filtration des éléments filtrants (6) est comprise entre 50 et 1000 micromètres, de préférence entre 100 et 500 micromètres.

## Claims

1. A filter cleaned by direct sweeping designed for mounting in a fluid conduit, including a tubular body (1) of a diameter substantially equal to that of the conduit; an upstream distribution plate (4) including a plurality of orifices supplying each one an end of a tubular filtering member (6) extending axially inside the body (1), characterized in that the other end of all the filtering tubular members (6) is connected directly and permanently to the same purge outlet (7), opening sideways from the body (1) and designed for being equipped with a valve, in such a manner as to purge all the filtering members at the same time.

2. A filter according to claim 1, characterized in that the connection of the downstream part of the filtering members has an elbow (11) connected to the purge outlet (7) and exhibits a collector (12) having the general shape of a revolution body (12).

3. A filter according to claim 2, characterized in that the collector (12) has a truncated shape expanding in the upstream direction of the filter.

4. A filter according to claim 3, characterized in that the upstream part of this collector (12) has a cylindrical portion.

5. A filter according to claim 3 or claim 4, characterized in that the upstream face of the collector (12) is domed.

6. A filter according to one of the preceding claims, characterized in that the basis of the collector includes chamfered tubes (13) designed for fitting inside the downstream end of the filtering members (6), while the upstream end of each filtering member (6) is fitted on a sleeve (5) integral with the distribution plate (4).

7. A filter according to one of the preceding claims, characterized in that it is formed exclusively of static components.

8. A filter according to one of the preceding claims, characterized in that the collector (12) includes a means creating, at the time of the purge, a whirling flow and/or hydraulic vibrations in the flow.

9. A filter according to one of the preceding claims, characterized in that it includes a series of filtering members (6) in a crown arrangement and a central filtering member (6) concentric with the axis of the filter.

10. A filter according to one of the preceding claims, characterized in that the fineness of filtration of the filtering members (6) is in the range from 50 to 1000 micrometers, preferably in the range from 100 to 500 micrometers.

## Patentansprüche

1. Filter mit Reinigung durch direktes Spülen, dazu bestimmt, in eine Fluidleitung eingebaut zu werden, mit einem röhrenförmigen Körper (1) eines Durchmessers, der dem der Leitung im wesentlichen gleicht, und mit einer strömungsaufwärts angebrachten Verteilerplatte (4) mit einer Mehrzahl von Öffnungen, deren jede das Ende eines röhrenförmigen Filterelements (6) versorgt, das sich axial im Inneren des Körpers (1) erstreckt, dadurch gekennzeichnet, dass das andere Ende jedes Filterelements (6) direkt und permanent an ein gleiches Zweigstück des einzigen Spülrohres (7) angeschlossen ist, das seitlich ausserhalb des Körpers (1) mündet und dazu bestimmt ist, mit einem Schieber ausgerüstet zu werden, so dass alle Filterelemente zur gleichen Zeit gespült werden.

2. Filter gemäss Anspruch 1, dadurch gekennzeichnet, dass das Anschlussstück der stromabwärts gelegenen Partie der Filterelemente mit an das Spülrohr (7) angeschlossenem Knie (11) ein Sammelrohr (12) darstellt, das die allgemeine Form eines Rotationskörpers (12) hat.

3. Filter gemäss Anspruch 2, dadurch gekennzeichnet, dass das Sammelrohr (12) die Form eines Kegelstumpfes hat, der sich nach der strömungsaufwärts gelegenen Seite des Filters hin ausweitet.

4. Filter gemäss Anspruch 3, dadurch gekennzeichnet, dass die strömungsaufwärts gelegene Partie dieses Sammelrohres (12) einen zylindrischen Abschnitt aufweist.

5. Filter gemäss Anspruch 3 oder Anspruch 4, dadurch gekennzeichnet, dass die strömungsaufwärts weisende Seite des Sammelrohres (12) gewölbt ist.

6. Filter gemäss einem der vorangehenden Ansprüche, dadurch gekennzeichnet, dass die Basis des Sammelrohres abgeschrägte Rohrstücke (13) hat, die dazu bestimmt sind, in das strömungsabwärts gelegene Ende der Filterelemente (6) eingesteckt zu werden, während das strömungsaufwärts gelegene Ende jedes Filterelements (6) auf eine Tülle (5) aufgesteckt ist, die fest mit der Verteilerplatte (4) verbunden ist.

7. Filter gemäss einem der vorangehenden Ansprüche, dadurch gekennzeichnet, dass er ausschliesslich aus unbewegten Teilen gebildet wird.

8. Filter gemäss einem der vorangehenden Ansprüche, dadurch gekennzeichnet, dass das Sammelrohr (12) Mittel umfasst, die zum Zeitpunkt des Spülens einen wirbelartigen Abfluss und/oder hydraulische Schwingungen im Abfluss erzeugen.

9. Filter gemäss einem der vorangehenden Ansprüche, dadurch gekennzeichnet, dass er eine Reihe von kronenartig angeordneten Filterelementen (6) sowie ein zentrales, auf die Filterachse ausgerichtetes Filterelement (6) umfasst.

10. Filter gemäss einem der vorangehenden Ansprüche, dadurch gekennzeichnet, dass die Filterfeinheit der Filterelemente (6) zwischen 50 und 1000 Mikrometer, vorzugsweise zwischen 100 und 500 Mikrometer liegt.
